Europäisches Patentamt

(19) European Patent Office

Office européen des brevets

(11) Veröffentlichungsnummer: **0 161 500**
**B1**

(12) **EUROPÄISCHE PATENTSCHRIFT**

(45) Veröffentlichungstag der Patentschrift:
04.02.87

(51) Int. Cl.⁴: **B 62 D 25/16**

(21) Anmeldenummer: **85104488.3**

(22) Anmeldetag: **12.04.85**

(54) **Verstellbarer Kotflügel.**

(30) Priorität: **13.04.84 DE 3413972**

(43) Veröffentlichungstag der Anmeldung:
**21.11.85 Patentblatt 85/47**

(45) Bekanntmachung des Hinweises auf die Patenterteilung:
**04.02.87 Patentblatt 87/6**

(84) Benannte Vertragsstaaten:
**DE FR GB IT**

(56) Entgegenhaltungen:
**DE-A-3 214 901**
**DE-U-1 979 502**
**FR-A-2 075 364**

(73) Patentinhaber: **Klöckner- Humboldt- Deutz Aktiengesellschaft, Deutz- Mülheimer- Strasse 111 Postfach 80 05 09, D-5000 Köln 80 (DE)**

(72) Erfinder: **Kronz, Erich, Volbach 41, D-5060 Bergisch Gladbach 1 (DE)**

EP 0 161 500 B1

## Beschreibung

Die Erfindung bezieht sich auf einen verstellbaren Kotflügel für die gelenkten Vorderräder eines Schleppers, mit einer den Radumfang z. T. umgebenden elastischen Schutzschale, die von zwei Stützstreben gehaltert ist, welche an einem mit dem Vorderrad verschwenkbaren Teil angreifen und durch Veränderung ihrer Stellung die Lage des Kotflügels zum Radumfang verändern.

Ein verstellbarer Kotflügel dieser Gattung ist durch die DE-A- 32 14 901 bekanntgeworden, wobei die beiden Stützstreben gelenkig an einem mit dem Rad verschwenkbaren Bauteil angreifen. Durch diese Anordnung läßt sich der Kotflügel aus einer hinteren Normalstellung am Vorderrad in eine vordere Stellung verschwenken. In der erstgenannten Stellung ist der Abstand des Kotflügels zum Reifen relativ gering, während der Kotflügel in der anderen Stellung einen wesentlich größeren Abstand zum Reifen erhält. Für die beiden Endstellungen des Kotflügels sind an der einen Stützstrebe Anschläge vorgesehen, und die andere Stützstrebe läßt sich nach Art eines mit Federkraft vorgespannten Kniehebels über einen Totpunkt in die eine bzw. andere Endstellung verschwenken. Mit dieser bekannten Einrichtung kann der Kotflügel aus seiner Normalstellung in eine andere Stellung verschwenkt werden, um beispielsweise für bestimmte Arbeitsgänge den Einschlagwinkel der Vorderräder zu vergrößern. Die Einrichtung ist relativ aufwendig.

Der Erfindung liegt die Aufgabe zugrunde, einen Kotflügel der eingangs umrissenen Art mit einfachen Mitteln dahingehend zu verbessern, daß dieser sich ohne weiteres an Vorderräder verschiedener Durchmesser anpassen läßt.

Die Aufgabe wird erfindungsgemäß dadurch gelöst, daß die beiden Stützstreben achsseitig an einem mit dem schwenkbaren Teil des Rades abnehmbar verbundenen Halter lösbar sowie radial verstellbar angreifen, zur Auflage der Schutzschale an den radseitigen Enden abgewinkelt und gegenseitig austauschbar sind und daß die abgewinkelten Enden in bezug auf ihre Längsmittellinien außermittig Bohrungen für Befestigungsschrauben der Schutzschale aufweisen, die sich je nach Randumfang an den einander zugewandten oder den voneinander abgewandten Seiten der abgewinkelten Enden befinden.

Ein diese Merkmale aufweisender verstellbarer Kotflügel eignet sich für Vorderräder verschiedener Durchmesser, so daß die Anfertigung von Kotflügeln und Stützstreben verschiedener Zwischengrößen entfällt. Gleichzeitig wird durch diese Maßnahmen die Lagerhaltung für Neu- und Ersatzteile weitgehend vereinfacht.

In Weiterbildung der Erfindung ist bei einem Schlepper mit einer Spurverstellachse vorgesehen, daß der Halter für die Stützstreben zur Anpassung der Schutzschale an die Spurverstellung des Rades im gleichen Maße axial verstellbar ist.

Gemäß einer vorteilhaften Ausgestaltung der Erfindung ist der Halter für die Stützstreben bei axialer Draufsicht bogenförmig und im Querschnitt zumindest endseitig durch hier zum Anschließen der Stützstreben radial zur Radachse verlaufende Laschen oder dergl. L-förmig ausgebildet, wobei die Laschen durch Drehung des Halters um 180° nach dem Lösen und Befestigen desselben eine entsprechend dem Maß der Spurverstellung des Rades axial versetzte Stellung aufweisen.

Eine konstruktiv einfache Lösung ist dadurch gegeben, daß die Stützstreben am Halter mittels Schrauben befestigt sind, und daß zur radialen Verstellung der Stützstreben in diesen und/oder im Halter mehrere radial versetzt angeordnete Bohrungen zur wahlweisen Aufnahme der Schrauben vorgesehen sind.

Schließlich hat es sich insbesondere im Hinblick auf das Schwingungsverhalten als vorteilhaft erwiesen, wenn die beiden Stützstreben in einem rechten Winkel zueinander am Halter befestigt sind.

Ein Ausführungsbeispiel der Erfindung wird im folgenden anhand der Zeichnung näher beschrieben. Es zeigt:

Fig. 1 in Seitenansicht einen verstellbaren Kotflügel gemäß der Erfindung,

Fig. 2 einen Schnitt nach der Linie II-II in Fig. 1,

Fig. 3 und 4 in Seitenansicht bzw. im Schnitt den Kotflügel gemäß der Fig. 1 und 2 bei Verwendung eines großen Reifens.

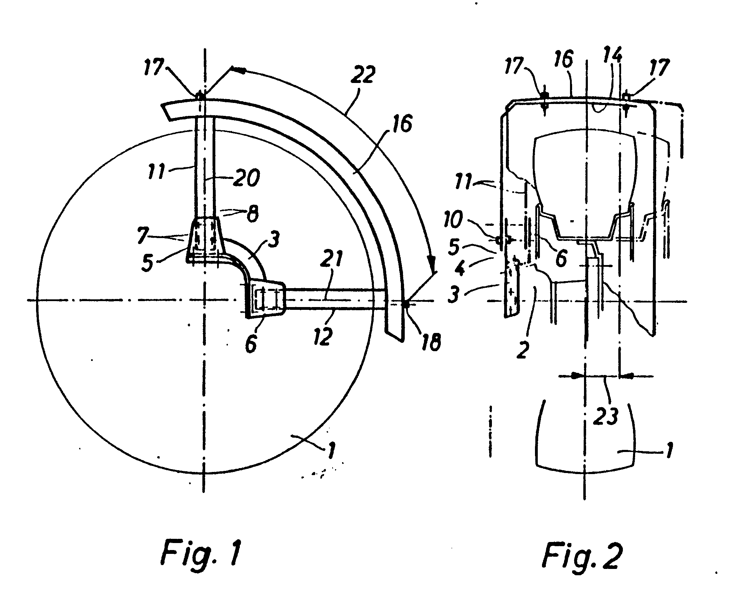

An einem Vorderrad 1 eines Schleppers ist gemäß Fig. 2 an einem mit dem Vorderrad 1 verschwenkbaren Teil 2 ein Halter 3 mittels Schrauben 4 befestigt. Der Halter 3 ist gemäß Draufsicht in Achsrichtung nach Fig. 1 bogenförmig ausgebildet und hat endseitig zur Radachse radial verlaufende Laschen 5 und 6, die den Halter 3 in diesen Bereichen etwa L-förmig gestalten. Der Halter 3 ist ferner so ausgebilde und mit Bohrungen versehen, daß er um jeweils 180° verdreht mittels der Schrauben 4 am Teil 2 befestigt werden kann. In den Laschen 5 und 6 sind radial mit Abstand zueinander je zwei Bohrungen 7 bzw. 8 angeordnet, die zur Aufnahme von Schrauben 10 für die Befestigung von Stützstreben II und 12 dienen. Im vorliegenden Fall greifen die Schrauben 10 in die achsnahen Bohrungen 7 der beiden Laschen 5 und 6 ein, da von zwei zur Auswahl stehenden Radgrößen ein Vorderrad 1 mit dem kleineren Durchmesser angebaut ist. Die Stützstreben 11, 12 sind an ihren äußeren Enden 14 radseitig abgewinkelt und tragen als den Reifen des Vorderrades 1 übergreifenden Teil des Kotflügels eine elastische Schutzschale 16. Zur Befestigung der Schutzschale 16 an den abgewinkelten Enden 14, 15 der Stützstreben 11 bzw. 12 dienen Schrauben 17 und 18. Die Schrauben 17, 18 greifen in Bohrungen ein, die in den abgewinkelten Enden 14 der Stützstreben 11 bzw. 12 in bezug auf deren Längsmittellinien 20 bzw. 21 außermittig liegen. Im gezeigten Ausführungsbeispiel gemäß Fig. 1 liegen die Bohrungen an den voneinander abgewandten Seiten der abgewinkelten Enden 14. Durch diese Anordnung ergibt sich für die Schrauben 17, 18 ein Bogenmaß 22, das bei einem festgelegten Abstand der Schraubenlöcher in der Schutzschale 16 dieser eine dem Radumfang angepaßte Form verleiht.

Wie in Fig. 2 dargestellt, ist an den Vorderrädern 1 eine Spurverstellung möglich und zwar in einem Maß, das mit 23 bezeichnet ist. Zur Anpassung der Schutzschale 16 an das axial verlagerte Vorderrad 1 (strich-punktiert dargestellt), werden zunächst die Stützstreben 11 und 12 einschließlich der Schutzschale 16 vom Halter 3 gelöst. Der Halter 3 wird nach dem Lösen der Schrauben 4 um 180° gedreht und mittels der Schrauben 4 wieder am Teil 2 so befestigt, daß die beiden Laschen 5 und 6 gegenüber ihrer ursprünglichen Lage vertauscht und gleichzeitig um das Maß 23 der Spurverstellung nach außen verlagert sind. Nach dem Befestigen der Stützstreben 11, 12 mittels der Schrauben 10 in der veränderten Lage des Halters 3 nehmen dieser sowie die daran befestigten Teile des Kotflügels die in Fig. 2 strich-punktiert gezeigte Stellung gegenüber dem axial verlagerten Vorderrad 1 ein.

Soll anstelle des Vorderrades 1 ein anderes Vorderrad 1' mit einem größeren Durchmesser bei Normalspur verwendet werden, dann wird zur Anpassung des Kotflügels der Halter 3 am Teil 2 der Achse so mittels der Schrauben 4 befestigt, daß die Lasche 5 wie in der Ausgangslage gemäß Fig. 1 nach oben gerichtet ist. An der Lasche 5 wird die Stützstrebe 12 und an der um 90° dazu versetzten Lasche 6 wird die Stützstrebe 11 befestigt, wobei die dafür vorgesehenen Schrauben 10 in die Bohrungen 8 der Laschen 5 und 6 eingreifen. Hierdurch erhalten die abgewinkelten Enden 14 einen dem größeren Raddurchmesser angepaßten größeren radialen Abstand zur Radachse. Durch den Wechsel der Stützstreben 11 und 12 gegenüber den Laschen 5 und 6 am Halter 3 sind die außermittigen Bohrungen zur Aufnahme der Schrauben 17, 18 in den voneinander abgewandten Seiten der abgewinkelten Enden 14 gelegen, so daß ein dem im Durchmesser größeren Vorderrad 1'' angepaßtes Bogenmaß 24 zwischen den Schrauben 17, 18 vorhanden ist. Die mit den Schrauben 17, 18 befestigte Schutzschale 16 paßt sich infolge ihrer Elastizität einer dem Umfang des Vorderrades 1' entsprechenden Biegung ohne weiteres an.

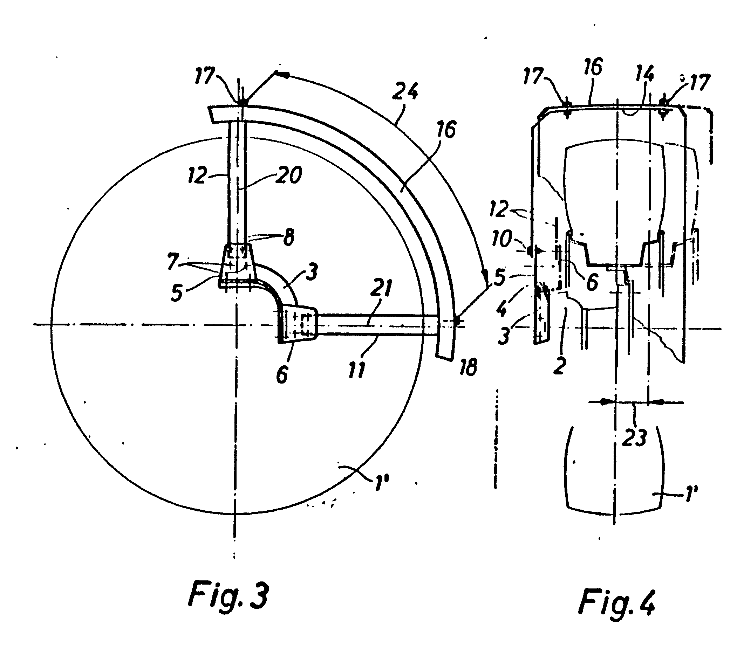

Zur Anpassung des Kotflügels an die veränderte Lage des Vorderrades 1'' nach einer Spurverstellung (strich-punktierte Darstellung des Vorderrades 1' gemäß Fig. 4) muß wiederum der Halter 3 nach dem Lösen aller Schrauben 4 und 10 um 180° gedreht werden. Nach dem Befestigen des Halters 3 in seiner neuen Lage mittels der Schrauben 4 werden auch die Stützstreben 11 und 12 wieder durch Einsetzen der Schrauben 10 in die Bohrungen 8 der Laschen 5 und 6 befestigt. Damit ist der Kotflügel wieder dem um das Maß 23 axial verstellten Vorderrad 1' angepaßt.

## Patentansprüche

1. Verstellbarer Kotflügel für die gelenkten Vorderräder (1) eines Schleppers, mit einer den Radumfang z. T. umgebenden elastischen Schutzschale (16), die von zwei Stützstreben (11,12) gehalten ist, welche an einem mit dem Vorderrad (1) verschwenkbaren Teil (2) angreifen und durch Veränderung ihrer Stellung die Lage des Kotflügels (16) zum Radumfang verändern, dadurch gekennzeichnet, daß die beiden Stützstreben (11, 12) achsseitig an einem mit dem schwenkbaren Teil (2) des Rades (1) abnehmbar verbundenen Halter (3) lösbar sowie radial verstellbar angreifen, zur Auflage der Schutzschale (16) an den radseitigen Enden (14) abgewinkelt und gegenseitig austauschbar sind und daß die abgewinkelten Enden (14) in bezug auf ihre Längsmittellinien (20 bzw. 21) außermittig Bohrungen für Befestigungsschrauben (17, 18) der Schutzschale (16) aufweisen, die sich je nach Randumfang an den einander zugewandten oder den voneinander abgewandten Seiten der abgewinkelten Enden (14) befinden.

2. Kotflügel nach Anspruch 1, wobei die Vorderräder des Schleppers eine Spurverstellachse aufweisen, dadurch gekennzeichnet, daß der Halter (3) für die Stützstreben (11, 12) zur Anpassung der Schutzschale (6) an die Spurverstellung des Rades (1) im gleichen Maße axial veränderlich ist.

3. Kotflügel nach den Ansprüchen 1 und 2, dadurch gekennzeichnet, daß der Halter (3) für die Stützstreben (11, 12) bei axialer Draufsicht bogenförmig und im Querschnitt zumindest endseitig durch hier zum Anschließen der Stützstreben radial zur Radachse verlaufende Laschen (5, 6) oder dergl. L-förmig ausgebildet ist und daß die Laschen (5, 6) durch Drehung des Halters um 180° nach dem Lösen und Befestigen desselben eine entsprechend dem Maß der Spurverstellung des Rades (1) axial versetzte Stellung aufweisen.

4. Kotflügel nach einem der vorhergehenden Ansprüche, dadurch gekennzeichnet, daß die Stützstreben (11, 12) am Halter (3) mittels Schrauben (10) befestigt sind und daß zur radialen Verstellung der Stützstreben (11, 12) in diesen und/oder im Halter (3) mehrere radial versetzt angeordnete Bohrungen (7, 8) zur wahlweisen Aufnahme der Schrauben (10) vorgesehen sind.

5. Kotflügel nach einem der vorhergehende Ansprüche, dadurch gekennzeichnet, daß die beiden Stützstreben (11, 12) in einem rechten Winkel zueinander am Halter (3) befestigt sind.

## Claims

1. An adjustable mudguard for the steered front wheels (1) of a tractor, comprising a resilient guard shell (16) partially surrounding the wheel periphery which is retained by two support struts (11, 12) in engagement with a part (2) pivotable with the front wheel (1) whereby variation of the setting of the struts varies the position of the mudguard (16) in relation to the wheel circumference,

characterised in that, at their ends nearer the wheel axle, the two support struts (11, 12) releasably and radially-adjustably engage a holder (3) detachably connected to the pivotable part (2) of the wheel (1) and, at their ends (14) nearer the wheel, are angled for the support of the guard shell (16) and are mutually exchangeable, the angled ends (14) having, at off-centre locations in relation to their longitudinal centre lines (20 and 21 respectively), bores for securing screws (17, 18) of the guard shell (16) which are situated, according to the wheel circumference, on the mutually-facing or mutually-remote sides of the angled ends (14).

2. A mudguard according to Claim 1 where the front wheels of the tractor comprise a track displacement axle, characterised in that, for the adaptation of the guard shell (16) to the track displacement of the wheel (1), the holder (3) for the support struts (11, 12) is axially displaceable by the same amount.

3. A mudguard according to Claims 1 and 2, characterised in that the holder (3) for the support struts (11, 12) is arcuate in axial plan view and is of L-shaped cross-section at least at its ends adjacent plates (5, 6) or the like extending radially of the wheel axle for the attachment of the support struts, and that the plates (5, 6), by rotation of the holder through 180 degrees after release and then securing thereof, take up an axially-offset position according to the amount of the track adjustment of the wheel (1).

4. A mudguard according to any one of the preceding Claims, characterised in that the support struts (11, 12) are secured to the holder (3) by means of screws (10) and that, for the radial adjustment of the support struts (11, 12) a plurality of radially offset bores (7, 8), are provided in the struts and/or in the holder (3) for selective reception of the screws (10).

5. A mudguard according to any one of the preceding Claims, characterised in that the two support struts (11, 12) are secured to the holder (3) at a right angle to one another.

## Revendications

1°) Garde-boue réglable pour les roues avant directrices (1) d'un tracteur comportant une coquille de protection (16), élastique, entourant partiellement la périphérie de la roue, coquille qui est maintenue par deux entretoises (11, 12) coopérant avec une partie (2), basculante de la roue avant (1) et modifiant la position du garde-boue (16) par rapport à la périphérie de la roue par changement de position, caractérisé en ce que les deux entretoises (11, 12) sont prévues du côté de l'axe de manière amovible et réglable radialement sur un support (3) amovible par rapport à la partie basculante (2) de la roue (1), en étant recoubées à leur extrémité (14) tournée vers la roue pour recevoir la coquille de protection (16) et sont interchangeables entre elles et en ce que les extrémités recourbées (14) présentent des perçages excentrés par rapport à leurs lignes longitudinales médianes (20, 21) pour recevoir des vis de fixation (17, 18) de la coquille de protection (16), et qui sont prévus suivant la périphérie de la roue sur des côtés tournés l'un vers l'autre ou opposés l'un à l'autre aux extrémités recourbées (14).

2°) Garde-boue selon la revendication 1, les roues avant du tracteur étant de voie réglable, caractérisé en ce que le support (3) des entretoises (11, 12) est réglable axialement de la même mesure pour adapter la coquille de protection (6) au réglage de la voie de la roue (1).

3°) Garde-boue selon les revendications 1 et 2, caractérisé en ce que le support (3) pour les entretoises (11, 12) est en forme d'arc en vue de-dessus, axiale, et en vue en coupe, au moins l'extrémité est constituée de pattes (5, 6) ou analogues en forme de L, pour la jonction des entretoises d'appui, radialement par rapport à l'axe de la roue, et en ce que les pattes (5, 6) prennent une position décalée axialement en fonction de la dimension de la largeur de voie de la roue (1), par rotation du support de 180° après enlèvement et fixation de celui-ci.

4°) Garde-boue selon l'une des revendications précédentes, caractérisé en ce que les entretoises (11, 12) sont fixées au support (3) à l'aide de vis (10) et en ce que pour le réglage radial des entretoises (11, 12), celles-ci et/ou le support (3) comportent plusieurs perçages (7, 8) décalés radialement pour recevoir sélectivement les vis (10).

5°) Garde-boue selon l'une des revendications précédentes, caractérisé en ce que les deux entretoises (11, 12) sont fixées à angle droit l'une par rapport à l'autre au support (3).

*Fig. 1*

*Fig. 2*

0 161 500

*Fig. 3*

*Fig. 4*

0 161 500